# FASCICULE DE BREVET EUROPEEN

(11) **EP 3 258 768 B1**
(45) Date de publication et mention de la délivrance du brevet: **02.01.2019**
(21) Numéro de dépôt: 16707870.8
(22) Date de dépôt: 05.02.2016
(51) Int. Cl.: A01C 3/02

(54) **FOSSE À LISIER DONT UNE PAROI PENTUE PRÉSENTE UNE CAVITÉ APTE À ACCUEILLIR UN ORGANE DE POMPAGE**
GÜLLEGRUBE MIT EINER SCHRÄGEN WAND MIT EINER AUSNEHMUNG ZUR AUFNAHME EINER PUMPEINRICHTUNG
LIQUID MANURE GROUND BASIN HAVING A BEVELLED WALL CONTAINING A CAVITY ADAPTED TO RECEIVE PUMPING MEANS

(30) Priorité: 18.02.2015 FR 1551342
(43) Date de publication de la demande: 27.12.2017
(73) Titulaire: Onorm, 53400 Craon (FI)
(72) Inventeur: DOUDET, Thierry, 35680 Domalain (FR)
(74) Mandataire: Gicquel, Frédéric
(86) Numéro de dépôt international: PCT/FR2016/050244
(87) Numéro de publication internationale: WO 2016/132036

(56) Documents cités:
- DE-A1- 3 437 169
- DE-U1- 8 316 020
- DK-B- 166 093
- FR-A1- 2 448 846
- GB-A- 2 174 883

## Description

Le domaine de l'invention est celui de la conception et de la réalisation d'installations pour exploitations agricoles. Plus précisément, l'invention concerne les fosses à lisier, et en particulier celles mettant en oeuvre une géomembrane en recouvrement de l'excavation faite dans la terre.

Dans le domaine de l'invention, il est classique que les grandes exploitations d'élevage de bovins mettent en oeuvre des fosses à lisier permettant de recueillir et stocker temporairement le lisier produit par le bétail.

Généralement, ces fosses à lisier sont au voisinage de la stabulation, le lisier étant raclé de façon automatique ou pas, et dirigé vers la fosse à lisier dans lequel il est stocké.

Bien entendu, ces fosses à lisier doivent régulièrement être vidangées, la fréquence de vidange étant évidemment fonction du nombre d'animaux présents dans la stabulation et du volume de la fosse.

Pour procéder à cette vidange, une tonne à lisier vient procéder à des séquences de pompage, à l'aide d'un bras de pompage s'étendant à partir de la tonne à lisier. Classiquement, le bras de pompage présente une extrémité de pompage sous forme d'un organe plus ou moins sphérique incluant des moyens motorisés destinés à accélérer le pompage.

Actuellement, on distingue deux catégories de fosses à lisier, à savoir :
- les fosses à lisier maçonnées, pour lesquelles le fond et les parois périphériques sont réalisées en béton ;
- les fosses mettant en oeuvre une géomembrane, pour lesquelles une excavation est réalisée dans la terre, et sur les parois de laquelle on vient déposer en recouvrement une géomembrane qui recouvre ainsi le fond et les parois de l'excavation (une fosse de ce type étant désigné par la suite par « fosse géomembrane ») ; un exemple de fosse de ce type est notamment décrit par le document de brevet publié sous le numéro DE 3437169A1.

Or, lors du pompage notamment, il est nécessaire d'exécuter des opérations de sorte de ne pas détériorer la géomembrane, ce qui conduirait à une fuite de celle-ci de nature à engendrer une pollution.

Plusieurs techniques sont pratiquées pour exécuter le pompage.

Selon une première technique, le conduit de pompage est déployé pour être déposé au fond de la fosse (ou sur une dalle prévue à cet effet au fond de la fosse, pour ne pas être directement au contact de la géomembrane). Cette technique s'avère être particulièrement simple mais engendre une perte de charge importante. En effet, la longueur de tuyau déployé doit être relativement importante et implique la présence d'au moins deux coudes du conduit qui ralentissent le pompage. La longueur peut s'avérer en effet relativement importante du fait que la tonne à lisier est distante du fond de la fosse en étant séparée d'une part par la paroi pentue qui permet classiquement de donner une forme évasée vers le haut aux fosses, et aussi par la présence d'une clôture qui, pour des règles de sécurité évidentes, entoure obligatoirement la fosse géomembrane.

Selon une autre technique, lors de la construction de la fosse, un conduit d'évacuation s'étend à partir du fond de la fosse, en profondeur puis s'étend de façon à revenir en bord de la fosse, pour finir par un tronçon de conduit qui remonte en direction d'un entonnoir destiné à accueillir un organe de pompage.

Une telle technique implique des coûts d'installation spécifique au conduit de pompage. En outre, comme précédemment, un tel conduit implique une perte de charge importante lors du pompage.

De plus, l'utilisation de l'entonnoir s'avère en pratique mal aisée et implique des difficultés de pompage.

Selon encore une autre technique, un puits de pompage est prévu en côté de la fosse, et est relié au volume de la fosse par un conduit. Cette technique limite les pertes de charges, mais s'avère relativement complexe et coûteuse en termes d'installation pour limiter la perte de charge.

Un
L'invention a notamment pour objectif de pallier ces inconvénients de l'art antérieur.

Plus précisément, l'invention a pour objectif de proposer une fosse à lisier dont la conception permet de réaliser un pompage avec une perte de charge notablement réduite par rapport aux solutions de l'art antérieur.

L'invention a également pour objectif de fournir une telle fosse à lisier qui soit peu coûteuse à réaliser.

Ces objectifs, ainsi que d'autres qui apparaîtront par la suite, sont atteints grâce à l'invention qui a pour objet une fosse à lisier, du type mettant en oeuvre une géomembrane en recouvrement d'une excavation, la fosse étant délimitée par des parois périmétriques s'étendant à partir d'un fond, au moins l'une des parois étant une paroi pentue, de telle sorte que la fosse est évasée vers le haut, la fosse étant caractérisée en ce que la paroi pentue présente une cavité s'étendant au voisinage du fond de la fosse, la cavité présentant deux parois latérales espacées de façon à ce que la cavité soit apte à accueillir un organe de pompage.

Ainsi, grâce à l'invention, les opérations de pompage sont effectuées, avec une telle fosse à lisier, de façon optimisée.

En effet, la cavité étant réalisée dans la paroi pentue elle-même, on réduit la distance entre la tonne à lisier et les moyens de pompage en bordure de la fosse par rapport à la cavité accueillant l'organe de pompage, ce qui limite notablement la perte de charge.

De plus, avec une telle technique, le conduit de pompage présente un seul coude entre l'organe de pompage à son extrémité libre et les moyens de pompage présents sur la tonne à lisier, ce qui contribue également à réduire la perte de charge.

Par ailleurs, une telle qualité s'avère relativement simple à réaliser, sans engendrer de surcoût important.

Selon un mode de réalisation avantageux, la cavité accueille un coffrage.

De cette façon, on supprime la possibilité que l'organe de pompage entre en contact, par exemple lors de sa mise en place, ou de son retrait, avec la géomembrane.

En outre, le coffrage exerce un rôle de consolidation de la cavité.

Selon un mode de réalisation particulier, le coffrage est réalisé en béton.

Bien entendu, d'autres matériaux peuvent être envisagés pour réaliser le coffrage, sans sortir du cadre de l'invention. A titre d'exemple, un matériau plastique ou composite peut être mis en oeuvre pour fabriquer le coffrage.

Selon une solution préférentielle, le coffrage présente des moyens de fixation de la géomembrane.

On peut de cette façon réaliser l'étanchéité de la géomembrane au niveau de la cavité directement sur le coffrage.

Préférentiellement, la paroi pentue s'étend entre une extrémité inférieure et une extrémité supérieure, et la cavité présente un bord supérieur à une hauteur inférieure de l'extrémité supérieure de la paroi pentue.

Une telle caractéristique permet d'obtenir les avantages suivants :
- limitation du coût de fabrication du coffrage destiné à prendre place dans la cavité ;
- limitation du coût de la phase de mise en place du coffrage dans la cavité, de par la réduction possible du poids du coffrage et par le recours possible à la pelleteuse de terrassement pour la pose du coffrage ;
- limitation des coûts de terrassement.

Selon une solution avantageuse, la fosse à lisier présente une zone de malaxage en entrée de la cavité.

De cette façon, le lisier est fluidifié dans la fosse géomembrane, au plus près de la zone de pompage, ce qui permet d'utiliser un accès à la zone de pompage pour réaliser le malaxage. Ainsi, pour réaliser un malaxage et un pompage, il n'est pas nécessaire de posséder plusieurs accès disposés autour de la fosse géomembrane. (économie d'un accès (portail d'accès à la fosse géomembrane, une clôture étant disposée à 1 m de la fosse autour de celle-cci), un portail étant normalement compris pour chaque ensemble de malaxage).

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 est une représentation schématique, sous forme de plan, d'une exploitation agricole susceptible de mettre en oeuvre une fosse à lisier selon l'invention ;
- la figure 2 est une représentation schématique d'une fosse à lisier selon l'invention, vue en perspective ;
- la figure 3 est une représentation schématique d'un coffrage destiné à être mis en oeuvre dans une fosse à lisier selon l'invention.

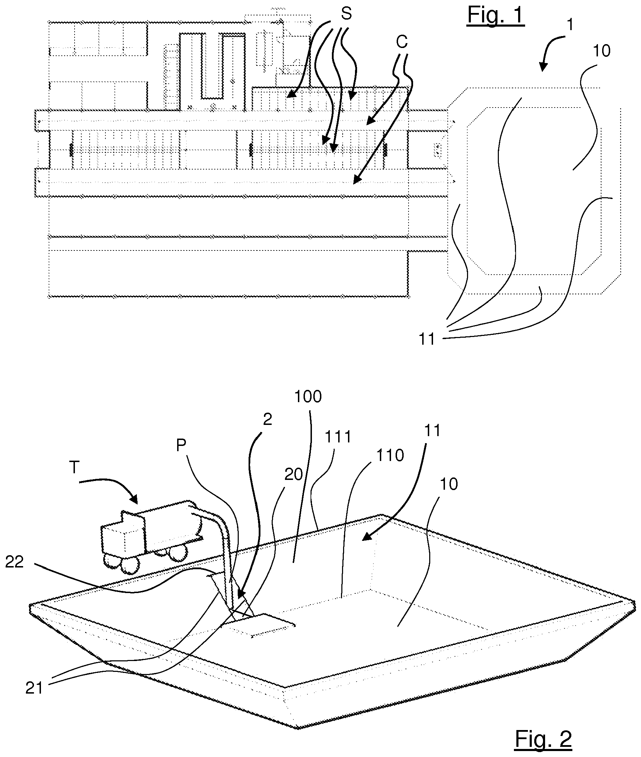

Telle qu'illustrée par la figure 1, une exploitation d'élevage agricole comprend classiquement un ou plusieurs bâtiments, incluant chacun une pluralité de stabulation S, de part et d'autre d'un ou de plusieurs couloirs C présentant classiquement un sol béton. Ces couloirs C permettent la circulation des bovins, mais également de recueillir le lisier produit par les bovins. Ce lisier est raclé manuellement ou automatiquement en vue d'être dirigé vers la fosse à lisier 1 présente en côté du bâtiment.

On note qu'une fosse à lisier selon l'invention est du type mettant en oeuvre une géomembrane en recouvrement de l'excavation réalisée dans la terre.

En référence aux figures 1 et 2, la structure classique d'une fosse à lisier 1 comprend :
- un fond 10, pouvant présenter des côtés de 30 à 40 mètres de long ;
- des parois périmétriques 11, entourant donc le fond 10 en s'étendant à partir de celui-ci.

Après réalisation de l'excavation constituant la fosse, les parois périmétriques 11 sont réalisées de façon à constituer des parois pentues, de telle sorte que la fosse est évasée vers le haut tel que cela ressort clairement de la lecture de la figure 2. En pratique, ces parois périmétriques sont des talus réalisés avec une pente de 45° tout autour de la fosse, cette pente assurant une bonne tenue des parois.

Selon le principe de l'invention, au moins l'une des parois périmétriques constitue une paroi pentue 100 et présente une cavité 2 s'étendant à partir d'une base 20 au voisinage du fond 10 de la fosse cette cavité présentant deux parois latérales 21 espacées l'une de l'autre de façon à ce que la cavité soit apte à accueillir un organe de pompage P, et en particulier un organe de pompage de type accélérateur de pompage présent à l'extrémité d'un conduit porté par une tonne à lisier T.

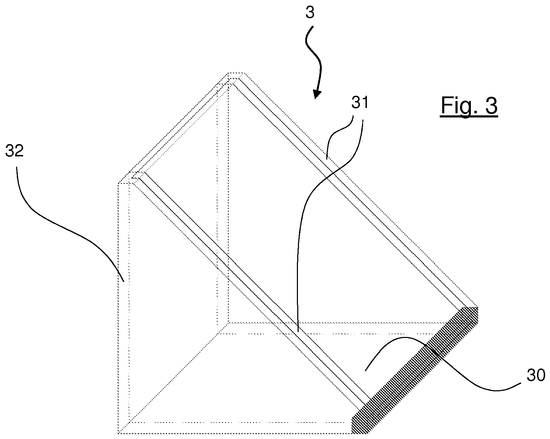

Selon le présent mode de réalisation, un coffrage 3 tel qu'illustré par la figure 3 est rapporté dans la cavité, et constitue en lui-même, une fois installé, les parois de la cavité. Un tel coffrage est préférentiellement réalisé en béton, mais peut être réalisé dans d'autres matériaux.

Tel que cela apparait sur la figure 3, le coffrage 3 présente un fond 30 destiné à reposer sur la base 20 de la cavité. A partir de ce fond 30, s'étendent des parois latérales 31 et une paroi arrière 32 destinées à être amenées en appui contre les parois correspondantes de la cavité.

De plus, le coffrage comprend des moyens de fixation de la géomembrane en recouvrement de l'excavation, permettant d'assurer l'étanchéité de la membrane en retour du coffrage.

Pour cela, on fixe une pièce inox sur le béton.

On vient positionner la membrane sur la pièce inox, la membrane étant maintenue par des clips de fixation. Ensuite on vient rapporter une protection en inox sur les clips de fixation.

La membrane est pincée entre la pièce en inox et la protection en inox. La protection inox est vissée sur la pièce inox, en pinçant la membrane. Par précaution, on met une protection inox plus large, en la positionnant en recouvrement de la pièce inox, de la membrane et des clips, pour protéger le tout.

Par ailleurs, on note que la paroi pentue s'étend entre une extrémité inférieure 110 et une extrémité supérieure 111. La cavité 2 s'étend quant à elle de la base 20 jusqu'à un bord supérieur 22 s'étendant à une hauteur inférieure par rapport à l'extrémité supérieure 111 de la paroi pentue 11.

Les étapes de réalisation d'une fosse à lisier selon l'invention sont les suivantes :
- réalisation de l'excavation formant la fosse, en creusant la terre et en formant des parois périmétriques (des talus présentant, côté fosse, une pente à 45°), de telle sorte qu'au moins une de ces parois soit une paroi pentue (en pratique les quatre parois périmétriques sont pentues) et pose d'une géomembrane en recouvrement de l'excavation et des parois, en appliquant cette membrane contre les parois de l'excavation et contre les parois périmériques ;
- réalisation de la cavité 2 dans l'une des parois pentues ;
- pose du coffrage 3 dans la cavité 2 ;
- fixation mécanique de la membrane sur le coffrage.

## Revendications

1. Fosse à lisier (1), du type mettant en oeuvre une géomembrane en recouvrement d'une excavation, la fosse étant délimitée par des parois périmétriques (11) s'étendant à partir d'un fond (10), au moins l'une des parois étant une paroi pentue (100), de telle sorte que la fosse est évasée vers le haut,
**caractérisée en ce que** la paroi pentue (100) présente une cavité (2) s'étendant au voisinage du fond (10) de la fosse, la cavité (2) présentant deux parois latérales (21) espacées de façon à ce que la cavité soit apte à accueillir un organe de pompage (P).

2. Fosse à lisier selon la revendication 1, **caractérisée en ce que** la cavité (2) accueille un coffrage (3).

3. Fosse à lisier selon la revendication 2, **caractérisée en ce que** le coffrage (3) est réalisé en béton.

4. Fosse à lisier selon la revendication 2, **caractérisée en ce que** le coffrage (3) présente des moyens de fixation de la géomembrane.

5. Fosse à lisier selon l'une quelconque des revendications 1 à 4, **caractérisée en ce que** la paroi pentue (100) s'étend entre une extrémité inférieure (110) et une extrémité supérieure (111), et la cavité (2) présente un bord supérieur (22) à une hauteur inférieure de l'extrémité supérieure (111) de la paroi pentue (100).

## Patentansprüche

1. Güllegrube (1), in der Art eine Geomembran als Abdeckung eines Aushubs anwendend, wobei die Grube durch umlaufende Wände (11) begrenzt wird, die sich aus einem Boden (10) heraus erstrecken, wobei mindestens eine der Wände eine schräge Wand (100) ist, sodass die Grube nach oben ausgestellt ist,
**dadurch gekennzeichnet, dass** die schräge Wand (100) eine Ausnehmung (2) aufweist, die sich in der Nähe des Bodens (10) der Grube erstreckt, wobei die Ausnehmung (2) zwei Seitenwände (21) aufweist, die derart beabstandet sind, dass die Ausnehmung imstande ist, ein Pumporgan (P) aufzunehmen.

2. Güllegrube nach Anspruch 1, **dadurch gekennzeichnet, dass** die Ausnehmung (2) eine Schalung (3) aufnimmt.

3. Güllegrube nach Anspruch 2, **dadurch gekennzeichnet, dass** die Schalung (3) aus Beton gefertigt ist.

4. Güllegrube nach Anspruch 2, **dadurch gekennzeichnet, dass** die Schalung (3) Mittel zum Befestigen der Geomembran aufweist.

5. Güllegrube nach einem der Ansprüche 1 bis 4, **dadurch gekennzeichnet, dass** sich die schräge Wand (100) zwischen einem unteren Ende (110) und einem oberen Ende (111) erstreckt, und die Ausnehmung (2) einen oberen Rand (22) auf einer Höhe unterhalb des oberen Endes (111) der schrägen Wand (100) aufweist.

## Claims

1. Manure pit (1), of the type that uses a geomembrane for covering an excavation, said pit being defined by peripheral walls (11) extending from a bottom (10), at least one of the walls being an inclined wall (100), such that the pit becomes wider towards the top,
**characterised in that** the inclined wall (100) has a cavity (2) extending in the vicinity of the bottom (10) of the pit, the cavity (2) having two side walls (21) which are interspaced such that the cavity can receive a pumping body (P).

2. Manure pit according to claim 1, **characterised in that** the cavity (2) receives a casing (3).

3. Manure pit according to claim 2, **characterised in that** the casing (3) is made of concrete.

4. Manure pit according to claim 2, **characterised in that** the casing (3) has means for fastening the geomembrane.

5. Manure pit according to any of claims 1 to 4, **characterised in that** the inclined wall (100) extends between a lower end (110) and an upper end (111), and the cavity (2) has an upper edge (22) at a height less than the upper end (111) of the inclined wall (100).
